Europäisches Patentamt

(19) European Patent Office

Office européen des brevets

(11) Publication number: 0 401 975
A2

(12) EUROPEAN PATENT APPLICATION

(21) Application number: 90304942.7

(51) Int. Cl.5: G06F 9/44

(22) Date of filing: 08.05.90

(30) Priority: 09.06.89 US 364763

(43) Date of publication of application:
12.12.90 Bulletin 90/50

(84) Designated Contracting States:
DE FR GB IT SE

(71) Applicant: APPLE COMPUTER, INC.
20525 Mariani Avenue
Cupertino, California 95014(US)

(72) Inventor: Cypher, Allen
724 Bryant Street
Palo Alto, California 94301(US)

(74) Representative: Wombwell, Francis et al
Potts, Kerr & Co. 15, Hamilton Square
Birkenhead Merseyside L41 6BR(GB)

(54) Method for programming by example.

(57) A method for programming by example using a computer system includes indicating if the user repeats a sequence of commands similar to an earlier sequence, and displaying an expected next command. Through further use a program is developed to allow the system to perform the sequence and its variations without further user input. This method is implemented by monitoring and recording user commands, searching back to detect earlier sequences of commands similar to the current sequence of commands, and developing an expected next command based on continuing any pattern of change observed from earlier to current occurrences of the command. The implementation can also develop a general program for performing the sequence and its variations, and if activated, execute the program, thereby performing the sequence and its variations.

EP 0 401 975 A2

## METHOD FOR PROGRAMMING BY EXAMPLE

This invention relates to a process for the use and programming of a computer system. In particular, the invention relates to a method for "programming by example," in which the use of the computer system automatically defines programs to be performed by the computer system.

## BACKGROUND OF THE INVENTION

In use, the computer system will receive commands, take actions, and produce displays. "Macro" tools are known in the field of computer programming to provide a "recording" capability in which the user can activate the recording capability, enter a sequence of commands, and then deactivate the recording capability. The recorded sequence can then be replayed to the computer system. These tools have the disadvantage of requiring the user to have thought in advance to activate the recording capability. In normal use, the user will often be several steps into a sequence before realizing that the sequence should have been recorded. A further disadvantage is that only the exact recorded sequence can be replayed, without allowing variation in item names or numbers. More desirable is a system which analyzes example sequences to create a general program, including the automatic change of item names and numbers in accordance with patterns revealed by the example sequences.

## SUMMARY OF THE INVENTION

This invention provides a new method for programming by example (PBE). As a computer system including this invention is used, an indication will occur if the user repeats a sequence of commands similar to an earlier sequence. This alerts the user to the possibility of an underlying pattern in their work.

As the user proceeds, the PBE system will indicate an expected next command to be performed. This expected next command is developed by looking from earlier to current occurrences of the command, and extending any pattern of change observed to anticipate its form in its next appearance. This indication of the expected next command supports the user in repeating the sequence and its variations. In this way the PBE system uses "anticipation" to assist the user.

When the user is confident that the PBE system has properly identified the sequence and its pattern of variation, the user can allow the PBE system to perform the sequence and its variations without further user input.

An implementation of this PBE method includes; monitoring and recording user commands, searching back to detect earlier sequences of commands similar to the current sequence of commands, and developing an expected next command based on continuing any pattern of change observed from earlier to current occurrences of the command. The implementation can also develop a general program for performing the sequence and its variations, and if activated, execute the program, thereby performing the sequence and its variations.

By the method of this invention, a user can perform programming by example without having to remember to activate a recording system. This method can support both identically repeating sequences, and sequences with variation between each occurrence. This method of programming by example is easy for a user to learn and applies to a wide variety of user actions. These and other advantages will become apparent from a consideration of the following description, drawing and claims.

## BRIEF DESCRIPTION OF THE DRAWING

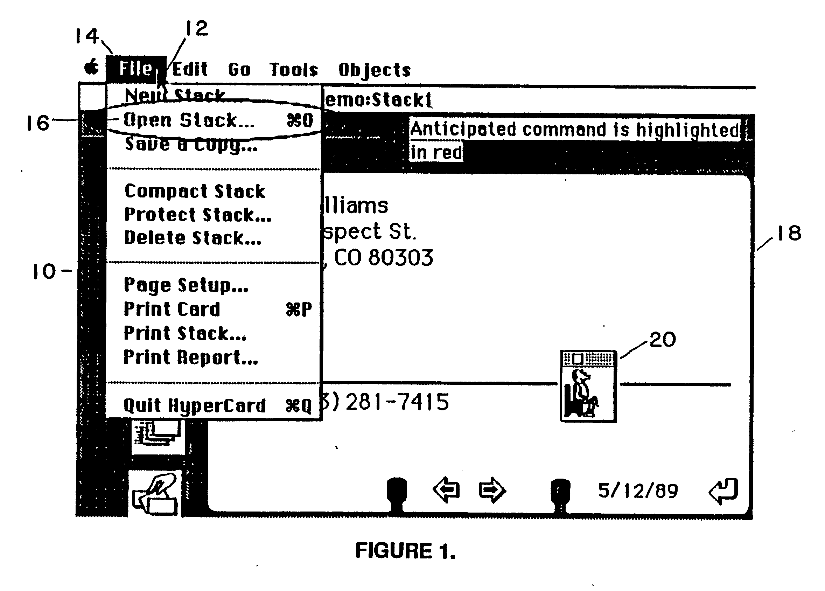

Figure 1 is an illustration of a computer display showing indications in accordance with this invention.

## DETAILED DESCRIPTION OF THE INVENTION

2

The invention will be described by an illustration of how a preferred embodiment appears to the user, and then by a description of how that embodiment is implemented.

Figure 1 is an illustration of a computer display 10 showing indications in accordance with this invention. For this illustration, suppose that the user has two stacks of address cards for use by the Hypercard® application for a Macintosh® computer system. (Hypercard and Macintosh are registered trademarks of Apple Computer, Inc.) The user wishes to combine these two stacks into a single stack. Since there is no command in Hypercard for appending stacks, the user will repeat a cut and paste process to remove cards from the first stack and place them at the end of the second stack. The computer system will also be running a programming by example (PBE) application in accordance with the method of this invention, and the PBE application is monitoring and recording the sequence of user commands.

Using the cursor 12 to select menus and commands, the user selects the "File" menu 14 and "Open Stack" 16. When prompted for the name of the stack to open, the user will enter "Stack1". When a stack is opened, the first card of the stack 18 appears on the screen. Continuing to use the menus and commands, the user will "Cut" the top card, "Open Stack" 16 the second stack "Stack2", go to the last card in the stack, and "Paste" the card into the stack.

The user must now repeat this procedure for each of the remaining cards in Stack1. The user goes back to Stack1 and cuts the top card. At this point, the PBE application recognizes that the user is repeating a sequence. An indication 20 will appear on the display 10 to alert them that they may be performing a repetitive activity.

The PBE application will also indicate the expected next command. In this illustration it will highlight "Open Stack" 16 by displaying it in the color red. The highlighting of the anticipated command allows the user to easily follow a sequence, and it shows what the PBE application would perform if allowed to operate on its own.

In a preferred embodiment, the highlighting will continue as the user go es through the sequence again. If each command performed matches the anticipated command, the PBE application changes the indication 20 to notify the user that it has verified the sequence, and can perform it on its own. When the user is confident that the PBE application has correctly identified the sequence and its variations, the user can activate the PBE application by clicking on its indication 20 to allow it to perform the repetitive sequence, cutting from Stack1 and pasting to Stack2.

An implementation of this illustrated embodiment includes monitoring and recording user commands, searching back to detect earlier sequences of commands similar to the current sequence of commands, and developing san expected next command by looking from earlier to current occurrences of the command and extending any pattern of change observed to anticipate the form of the expected next command. The implementation can also develop a general program for performing the sequence and its variations, and if activated, execute the program, thereby performing the sequence and its variations.

First, the user commands are monitored and recorded in a journal. The journal is a storage area within the memory or mass storage of the computer system. Table 1 shows a journal of recorded user commands in accordance with the preceding illustration. For example, line 1 shows the command to open "Stack1". As well as the journal, the PBE application also separately records further information about the objects referenced by the commands. For example, further information about a "card" includes the card's name, its number within the stack, and the name of it's stack. Further information about a "stack" includes its name and size.

When a new command arrives, the journal is searched to detect earlier sequences of commands similar to the current sequence of commands. Some occurrences will match more closely than others, and as the user proceeds, the best matching sequence may change.

An earlier occurrence can vary in detail, but still serve as a "match" or "repetition". For example, the same command on sequential objects can be detected as a match. When the previous occurrence is "cut card 1" and the next occurrence is "cut card 2", the PBE application can recognize that the user is performing the generic command "cut the next card." This recognition is possible because the structure and characteristics of cards and stacks are known to the PBE application.

In general, two occurrences of a command are similar if the same command acts on two similar objects. Two objects are similar if they are the same or are in sequential order. Where there is a hierarchical structure of objects grouped and contained within other containing objects, two similar objects should be within the same or sequential containing objects. Objects may be described by numbers, names or identification codes. Preferably, commands are recorded and comparisons done at a high level of abstraction relating only to the final selection, since details about intermediate cursor movements are not needed, and so that alternative routes leading to the same selection or command can be recognized as being equivalent.

Referring again to the Journal of Table 1, when the command of line 6 occurs, earlier line 1 will be recognized as similar. When line 7 occurs, both line 1 and line 2 will be recognized as a matching preceeding sequence. The end of the matching portion of a sequence can be detected by a new occurrence of the command which began the sequence. In this way, a matching sequence will be detected in which commands vary according to a pattern from an earlier occurrence to a later occurrence. An indicator can be placed on the display to alert the user of the detected repetition.

Having identified a matching sequence and pattern of variation, the PBE application will developing an expected next command by looking from earlier to current occurrences of the command and extending any pattern of change observed to anticipate the form of the expected next command. For example, the next command from an earlier occurrence can be modified according to the pattern of variation to form a corresponding next command of the current sequence. The expected next command is therefore that command which would come next in the matching sequence, but including any change such as in names or numbers of objects which are needed in order to continue the pattern of changes from occurrence to occurrence. For example, the change will often be the iterating or incrementing of a number such as a card number. Again, knowledge about the characteristics of the objects and commands can be used to anticipate the changes in the next expected command. Knowing that cards have a number within their stack, when a first sequence contains "cut card 1" and the next sequence contains "cut card 2", it is straightforward to anticipate that the next occurrence should be "cut card 3". The next expected command can be highlighted on the display to make it easy for the user to see what the PBE application believes to be the next command sin the sequence, and to make it easy for the user to select the highlighted command in order to follow the sequence.

If the PBE application has successfully anticipated a complete sequence, it has seen two complete passes through the sequence; an original recorded sequence, and the anticipated sequence. At this point the implementation can develop a general program for performing the sequence and its variations, and if activated, execute the program, thereby performing the sequence and its variations.

In developing the program, the commands contained within the matching sequence are placed as steps within a loop to be repeated. Table 2 lists a segment of program code generated to perform the repetitive sequence of the preceding illustration. For example, the lines from line 3 to line 12 will be repeated to perform the repetitive sequence of cutting and pasting between Stack1 and Stack2. For objects which are changing with each pass through the sequence, such as card 1, card 2, card 3, etc., a variable is defined and initialized, and can be incremented and tested with each pass through the loop. For example, in Table 2 "var1" counts the number of the last card of Stack2, which is increasing by one each time another card is pasted into Stack2. Other variables can be defined and initialized to represent termination conditions, and can be modified and tested to allow exit from the program loop, such as when the card number reaches the last card in a stack. Knowing the number of cards within a stack, it is possible to test within the loop so that repetitive cutting does not go beyond the number of cards available. For example, in Table 2, "terminateP" is set to true when the repetition should be terminated with this pass of the loop.

With such a program, the PBE application can repetitively perform the sequence and its variations without further user input. The sequence will continue and be repeated until a termination condition is reached. For example, in this illustration, eventually the last card in the stack will be reached, and the program will recognize this as a point to terminate. Again, the PBE application uses basic knowledge about the objects and commands, and about the application which is running to recognize termination conditions. In preferred embodiments, specific program code is generated to handle termination conditions. In other embodiments, the program code will not cause termination, but termination will occur when the computer system detects an error, such as "no further data".

The Hypercard application for the Macintosh computer has its own programming language with written equivalents for each user command. It will be apparent to a programmer that such languages are available for other applications, that such languages can be written for application programs, or that a separate conventional language can be used to receive and interpret user commands so as to implement the method of this invention. For example, in the UNIX® operating system, the user's "shell" as well as application programs can be programmed to record commands and compare sequences of commands as needed to facilitate the implementation of the PBE method of this invention. (UNIX is a registered trademark of AT&T Information Systems.) See for example, "The Structure of Users' Activities" by Allen Cypher in User Centered System Design, Lawrence Erlbaum Associates, 1986. There are also graphical interfaces for essentially text-based operating systems, such as Windows® for the MS-DOS® operating system. (Windows and MS-DOS are registered trademarks of Microsoft Corporation.) In these systems, the graphical interface can be modified to support the recording and comparing of user commands, or the commands being passed to the operating system can be intercepted, recorded and compared to implement the PBE

4

method of this invention.

An illustration of the appearance and implementation of a PBE application program in accordance with the method of this invention has been given, and it will be apparent to one skilled in the art to adapt this method to other embodiments. Other matching rules and procedures can be used, other indications and interactions with the user can be used. The user can be allowed to specify tests and conditional steps to be included in the sequence of commands. Other graphical displays, other indicators, other means of selecting and defining commands, and other command languages can be used without departing from the true scope and spirit of the invention as defined by the following claims.

JOURNAL:

```
1.  Open Stack:'Stack1'
2.  do Menu 'Cut Card'
3.  Open Stack:'Stack2'
4.  do Menu 'Last'
5.  do Menu 'Paste Card'
6.  Open Stack:'Stack1'
7.  do Menu 'Cut Card'
8.  Open Stack:'Stack2'
9.  do Menu 'Last'
10. do Menu 'Paste Card'
```

TABLE 1.

PROGRAM:

```
1.  put 28 into var1
2.  put false into terminateP
3.  repeat
4.      go to card 1 of stack 'Stack1'
5.      if 1 = the number of the last card
6.        then put true into terminateP
7.      do Menu 'Cut Card'
8.      go to card var1 of stack 'Stack2'
9.      do Menu 'Paste Card'
10.     if terminateP then exit repeat
11.     put var1 + 1 into var1
12. end repeat
```

TABLE 2.

**Claims**

1. A method for programming by example using a computer system in which commands are received and a display is produced, comprising:
recording said commands;
detecting an earlier sequence of commands similar to a current sequence of commands, said sequences differing by a pattern of change; and
developing an expected next command by applying said pattern of change to a next command in said earlier sequence.

2. A method as in claim 1, further comprising:
developing a program for performing a next sequence differing from said current sequence by said pattern of change; and
executing said program, thereby performing said next sequence.

3. A method as in claim 1 further comprising:
indicating on said display when said detection occurs.

4. A method as in claim 1 further comprising:
indicating on said display said expected next command.

5. A method for programming by example using a computer system in which commands are received and a display is produced, comprising:
recording said commands;
detecting an earlier sequence of said commands similar to a current sequence of said commands, with corresponding commands between said similar sequences varying according to a pattern;
indicating on said display when said detection occurs; and
indicating on said display an expected next command based on a next command from said earlier sequence being modified according to said pattern of variation to form a corresponding expected next command of said current sequence.

6. A method as in claim 5, further comprising:
developing a program for generating further sequences similar to said similar sequences with corresponding commands between said further sequences varying according to said pattern; and
executing said program, thereby performing said further sequences with continued variation of corresponding commands according to said pattern.

7. A method as in claim 6, further comprising being activated by a user to execute said program.

8. A method as in claim 7, wherein said program is repetitively executed until a termination condition occurs.

9. A method as in claim 8, wherein developing a program comprises:
defining a program loop;
defining commands to be executed within said program loop;
defining object variables to represent objects changing between said older sequence of commands and said most recent sequence of commands;
defining program steps to increment and test said object variables within said program loop;
defining termination variables to represent termination conditions; and
defining program steps to test said termination variables within said program loop, allowing exit from said program loop.

10. A method for programming by example using a computer system in which commands are received and a display is produced, comprising:
recording said commands in a journal;
comparing a received command to said journal to detect an earlier occurrence of said received command, said earlier occurrence defining the start of a matching sequence; and
indicating to said display the expected next command based on following the sequence of commands in said matching sequence.

11. A method as in claim 10, further comprising:
receiving a sequence of commands varying from the commands in said matching sequence according to a pattern;
receiving a third occurrence of said received command, said third occurrence defining the end of said matching sequence and the start of a third repetition of commands varying according to said pattern from the commands in said matching sequence;
receiving an activation command; and
repetitively performing a sequence of commands varying according to said pattern from the commands in said matching sequence until a termination condition occurs.

12. A method for programming by example using a computer system in which a cursor control device is used to select objects on a display and to select commands from a menu on said display, comprising:

recording said selections;

comparing a most recent sequence of said selections to an older sequence of said selections, and indicating when a matching sequence of selections which vary according to a pattern is detected; and

indicating on said display an expected next selection based on applying said pattern of variation to said matching sequence to generate an expected next selection.

13. A method as in claim 12, further comprising;

repetitively applying said pattern of variation to said matching sequence to generate expected next selections.

14. A method for programming by example using a computer system in which commands are received and a display is produced, comprising:

recording said commands in a journal;

comparing a most recent sequence of said commands to an older sequence of said commands and indicating on said display when similarity of commands is detected; and

indicating on said display an expected next command based on following the sequence of commands of said older sequence, but modifying said command to extend any pattern of variation detected from said older sequence to said most recent sequence.

15. A method as in claim 14, further comprising:

developing a program to generate said expected next commands by applying said detected pattern of variation to said older sequence; and

repetitively performing the commands of said program.

16. A method as in claim 15, wherein developing a program comprises:

defining a program loop;

defining commands to be executed within said program loop;

defining object variables to represent objects changing between said older sequence of commands and said most recent sequence of commands;

defining program steps to increment and test said object variables within said program loop;

defining termination variables to represent termination conditions; and

defining program steps to test said termination variables within said program loop, allowing exit from said program loop.

7

14  12

**File** Edit Go Tools Objects

New Stack...          |emo:Stack1

Open Stack...   ⌘O    |     Anticipated command is highlighted|
Save a Copy...        |     in red|

Compact Stack          lliams
Protect Stack...       spect St.
Delete Stack...        , CO 80303

Page Setup...
Print Card      ⌘P
Print Stack...
Print Report...

Quit HyperCard  ⌘Q )281-7415                    20

⇦ ⇨            5/12/89  ⤶

16

10

18

EP 0 401 975 A2

**FIGURE 1.**